# EUROPEAN PATENT SPECIFICATION

(11) **EP 2 787 609 B1**
(45) Date of publication and mention of the grant of the patent: **25.07.2018**
(21) Application number: 14162533.5
(22) Date of filing: 31.03.2014
(51) Int. Cl.: H02K 5/20, B64C 25/40, H02K 9/14, F01P 5/06, F01P 11/12, H02K 9/06

(54) **Motor cooling apparatus and method**
Kühlvorrichtung und -verfahren für Elektromotoren
Appareil et procédé de refroidissement de moteur

(30) Priority: 01.04.2013 US 201313854459
(43) Date of publication of application: 08.10.2014
(73) Proprietor: Hamilton Sundstrand Corporation, Windsor Locks, CT 06096-1010 (US)
(72) Inventor: Pal, Debabrata, Hoffman Estates, IL 60195 (US)
(74) Representative: Dehns

(56) References cited:
- GB-A- 1 243 950
- US-A- 4 839 547
- US-A- 4 890 584
- US-A1- 2011 254 392
- US-A1- 2012 080 965

## Description

### Technical Field

The present disclosure relates generally to a motor cooling apparatus.

### Background

Enclosed electric motors can be used to drive a wheel, propeller, etc. for example, in aircraft during taxi. In the aviation context, motors are generally air cooled using the motion of the aircraft to circulate air past the heat generating components, thereby dissipating the heat. The high power requirements of the motors in some applications, even assuming high efficiency, results in a large amount of heat generated in the motor, which must be dissipated to avoid, e.g., winding failures. Accordingly, convection by air passing by the normal motion of the aircraft and/or radiation may be insufficient to avoid excessive temperatures in the motor.

In an effort to increase heat dissipation, some motors may provide channels therein and may drive a fan communicating with such channels, allowing the air to be drawn in and forced through the motor. For example, such channels may be formed in the interior diameter of the shaft, between the rotor and the stator, and around the stator. The air is received directly from the ambient environment to support high flow rates, and may be unfiltered. As such, there is a risk that the air channels can become clogged with foreign objects, such as insects, paper, debris, etc. that may be found in the environment. Such clogging, however, can cause high localized temperature rises in the stator around the air channels. These temperature rises can result in the insulation on the stator magnet wire failing, thus leading to a winding failure in the motor. US 4839547 A describes a motor frame and motor with increased cooling capacity. GB 1243950 A describes the cooling of rotating electric machines. US 2011/254392 A1 describes an alternator with dual axial air flow.

### Summary

A cooling apparatus for cooling the driver of a driver system is described in claim 1. The driver system includes a driver, a device configured to move a cooling fluid, and a shroud disposed at least partially over the driver. The shroud includes a plurality of inlet orifices and a plurality of outlet orifices in fluid communication with the device, and a plurality of fins extending at least partially between the shroud and the driver, at least partially in the driver, or both, the plurality of fins being spaced apart and defining flowpaths therebetween, wherein the flowpaths communicate with the inlet orifices and the outlet orifices. The plurality of inlet orifices comprise rows of orifices aligned with each of the flowpaths, wherein cross-sectional flowpath areas of the plurality of inlet orifices decrease proceeding in an axial direction toward the axial end wherein the plurality of outlet orifices are defined The cooling apparatus may include a cylindrical outer wall defining first and second axial ends and a plurality of inlet orifices extending radially therethrough. The cylindrical outer wall is configured to fit over the driver. The cooling apparatus may also include a plurality of fins spaced circumferentially apart and extending radially inward from the cylindrical outer wall. The plurality of fins and the cylindrical outer wall may at least partially define flowpaths extending at least partially between the first and second axial ends. At least some of the plurality of inlet orifices may be positioned between the plurality of fins, such that the plurality of inlet orifices communicate with the flowpaths. The flowpaths are configured to communicate with a device configured to move a cooling fluid therethrough. A method for operating a driver system is also described herein. The method includes rotating a fan using a driver. Rotating the fan induces air to flow radially inwards through inlet orifices defined in a shroud disposed around the driver, then generally axially through flowpaths defined between circumferentially-adjacent fins extending radially at least partially between the shroud and a rotor of the driver, and then out of the shroud via outlet orifices defined in the shroud. The method also includes reversing a rotational direction of the driver, such that the fan reverses rotational direction, causing the air to enter through the outlet orifices, then proceed through the flowpaths, and then out of the shroud the inlet orifices, so as to clear out the flowpaths.

The present invention is defined by the accompanying independent claim

### Brief Description of the Drawings

The accompanying drawings, which are incorporated in and constitute a part of this specification, illustrate aspects of the present teachings and together with the description, serve to explain principles of the present teachings. In the figures:
Figure 1 illustrates a system for driving a component, according to an embodiment.
Figure 2 illustrates a raised perspective view of a shroud for a driver of the system, according to an example of background art useful for understanding the invention.
Figure 3 illustrates an enlarged partial side view of the shroud, according to an embodiment.
Figure 4 illustrates an axial end view of the shroud, according to an embodiment.
Figure 5 illustrates another embodiment of the system.
Figure 6 illustrates a stator lamination for use in the system of Figure 5, according to an embodiment.
Figure 7 illustrates a flowchart of a method for operating a driver system, according to an embodiment.

### Detailed Description

Reference will now be made in detail to various embodiments of the present teachings, an example of which is illustrated in the accompanying drawings. Wherever possible, the same reference numbers will be used throughout the drawings to refer to the same or like parts.

In the following description, reference is made to the accompanying drawings that form a part thereof, and in which is shown by way of illustration specific implementations in which may be practiced. These implementations are described in sufficient detail to enable those skilled in the art to practice these implementations and it is to be understood that other implementations may be utilized and that changes may be made. The following description is, therefore, merely exemplary.

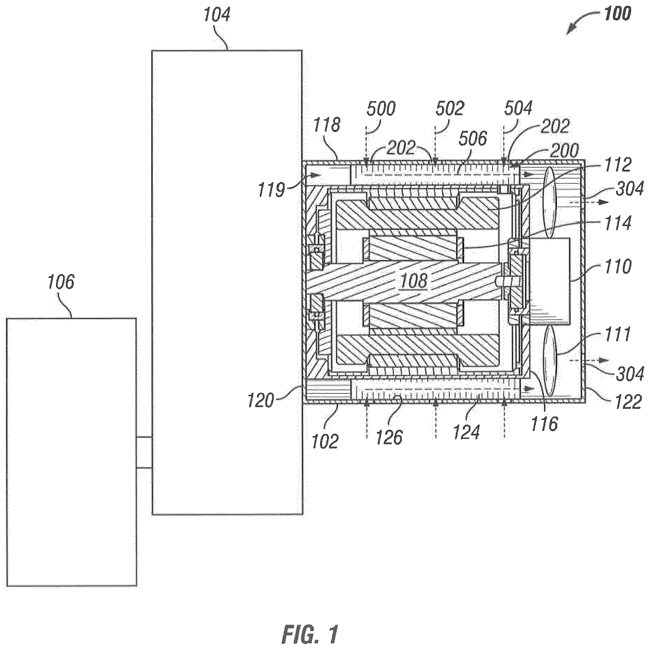

Figure 1 illustrates a schematic view of a system 100, according to an embodiment. The system 100 generally includes a driver 102, a gearbox 104, and a driven component 106; however, in various embodiments, the gearbox 104 may be omitted for a direct drive or substituted with any other shaft-speed changing device. The driver 102 may include a shaft 108 which is coupled with the gearbox 104 on one end, and with a fan 110 on the other end, such that the driver 102 is configured to drive the fan 110. In other embodiments, the fan 110 may be driven by a secondary driver. Further, the fan 110 may be disposed between the gearbox 104 and the driver 102 in addition to or instead of the position of the fan 110 illustrated. The driven component 106 may be a wheel, propeller, fan, impeller, or any other component that benefits from connection to the driver 102.

The fan 110 may include impeller blades 111 configured to push or induce a cooling fluid, for example, ambient air away from the driver 102. As such, the fan 110 may be any device configured to move a fluid, such as one or more an axial or radial fans, blowers, and/or the like. Moreover, in some embodiments, the fan 110 may be the driven component 106.

The driver 102 may be an electric motor. In other embodiments, however, the driver 102 may be an internal combustion or diesel engine, or any other type of prime mover of a suitable size, weight, torque or power output, or the like for any application. In an electric motor embodiment, the driver 102 may be generally cylindrical in shape, and may have a stator 112, which may include electrical windings, and a rotor 114 coupled with the shaft 108. The rotor 114 may be disposed concentrically with and at least partially within the stator 112 and configured to interact with the stator 112 to cause the shaft 108 to rotate about its central axis. The driver 102 may be contained in a casing 116, which may be at least partially constructed from a thermally-conductive material, such as aluminum. Further, the driver 102 may include bearings, seals, lubrication systems, etc., according to any suitable design.

The system 100 may also include a shroud 118, which may be sized to fit over the casing 116, so as to define an annular gap 119 therebetween. The shroud 118 may have a first axial end 120 and a second axial end 122. The shroud 118 may be disposed over the casing 116, such that the fan 110 is disposed proximal to the second axial end 122 and the first axial end 120 is disposed proximal to the gear box 104. The first axial end 120 of the shroud 118 may be joined by any suitable process or device to the gearbox 104, or to any other structure, e.g., a flange coupled to the casing 116 or the like. In some cases, the shroud 118 may extend over the fan 110, such that the fan 110 may be between the driver 102 and the second axial end 122 of the shroud 118. In other embodiments, the fan 110 may be disposed outside of the shroud 118, such that the second axial end 122 is positioned between the fan 110 and the driver 102.

The shroud 118 may also include one or more fins 124, which may extend inward from an outer wall 126 of the shroud 118 and through the annular gap 119 into proximity and/or contact with the casing 116. The fins 124 may be defined by machining the shroud 118 or by attaching (e.g., welding, brazing, fastening, etc.) separate fins 124 or an array of fins 124 to the shroud 118. Further, the fins 124 may extend axially, at least partially between the first and second axial ends 120, 122.

The fins 124 may have any shape. For example, the end of the fins 124 may be radiused so as to match a radius of the casing 116 and thereby fit onto the casing 116, but in other embodiments may be flat, so as to make tangential contact with the casing 116. In yet other embodiments, the casing 116 may be grooved or otherwise formed to mate with the fins 124. Moreover, the fins 124 may extend straight axial and straight radial, but in other cases may divert from straight axial and/ or radial, forming waves, ridges, turns, etc., for example, to increase flowpath height, length, etc. Such flowpaths will be described in greater detail below. In some embodiments, the shroud 118 may be made of a thermally conductive material, such as aluminum.

The shroud 118 may also include inlet orifices 202 and outlet orifices 304, which will be described in greater detail below. The inlet orifices 202 may provide openings in the shroud 118 through which cooling fluid may be received. The outlet orifices 304 may provide openings in the shroud 118 through which cooling fluid may be exhausted. One or more flowpaths 200 may be defined between the inlet orifices 202 and the outlet orifices 304, such that an open cooling fluid circuit extends in the shroud 118.

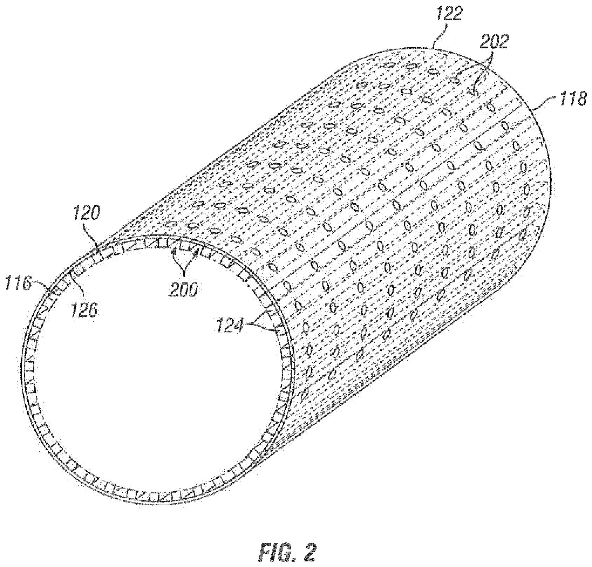

Figure 2 illustrates a raised perspective view of the shroud 118, showing an end view of the first axial end 120, according to an example. As shown, the fins 124 are disposed at circumferential increments and extend radially inward from the outer wall 126. The first axial end 120 may be configured to fit over the casing 116 of the driver 102 (Figure 1), and may thus be open, as shown. The flowpaths 200 may be defined between each pair of adjacent fins 124, and the flowpaths 200 may extend axially between the first and second axial ends 120, 122, for the length of the fins 124. Further, the flowpaths 200 may be defined on a radial outside by the outer wall 126 of the shroud 118 and on a radial inside by the casing 116 (shown in phantom for purposes of illustrating the shroud 118). In some examples, the casing 116 may have one or more grooves formed therein, which may form radially inward extensions to the flowpath 200.

The inlet orifices 202 may extend radially through the outer wall 126. Further, the inlet orifices 202 may be disposed along each of the flowpaths 200; i.e., the inlet orifices 202 may extend through the outer wall 126, between adjacent fins 124, so as to provide fluid communication between the flowpaths 200 and, e.g., the exterior of the shroud 118. In some embodiments, not all the flowpaths 200 communicate through the inlet orifices 202.

Furthermore, any number of the inlet orifices 202 may be defined for communication with a given one of the flowpaths 200. In some examples, one, some, or all of the flowpaths 200 may communicate with the same number of inlet orifices 202; however, in other examples, some of the flowpaths 200 may communicate with different numbers of inlet orifices 202. Additionally, the inlet orifices 202 may have a circular shape, as shown, but in other examples may be slots, polygons, honeycombs, or provided by a suitable pattern of small holes which together provide the inlet orifices 202. Moreover, the inlet orifices 202 may share a common cross-sectional area, but, as described below, in other examples, the cross-sectional area may vary depending, for example, on the location of the inlet orifices 202 on the shroud 118.

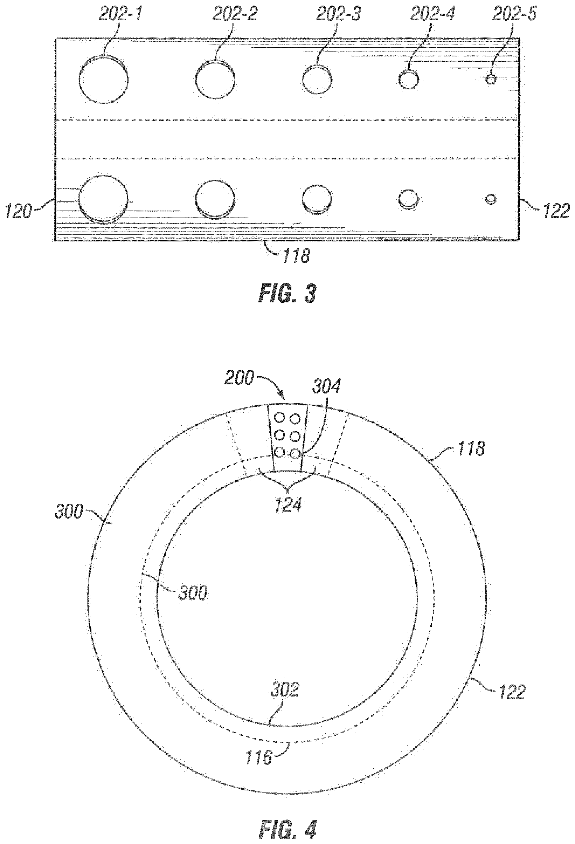

Figure 3 illustrates an enlarged side view of a portion of the shroud 118, according to an embodiment. As shown, the inlet orifices 202 include inlet orifices 202-1, 202-2, 202-3, 202-4, and 202-5, with orifice 202-1 being closest to the first axial end 120 and orifice 202-5 being closest to the second axial end 122. The largest orifice 202-1 may have a largest dimension (i.e., in the case of the circular orifice 202-1, a diameter) that is smaller than a smallest dimension of the flowpath 200 (Figure 2), so as to block foreign objects large enough to become lodged in the flowpath 200 from entering the flowpath 200 through the inlet orifices 202. Accordingly, the shroud 118 may provide a protected cooling fluid inlet for the flowpaths 200.

It will be appreciated that five inlet orifices 202 are shown as an illustrative example, and more or fewer inlet orifices 202 may be employed without departing from the scope of the present disclosure. Moreover, the inlet orifices 202 may be non-circular, i.e., elliptical, polygonal, slot-shaped, etc., with a largest dimension of the non-circular orifice 202 being smaller than the smallest dimension of the flowpath 200, for example, to retain the protective function of the shroud 118. Further, in some cases, each orifice 202 may be provided by a plurality of smaller holes, disposed in any suitable pattern. It will be appreciated that although the orifices 202 are illustrated as all being the same shape, that a variety of orifice 202 shapes, even in a single implementation of the shroud 118, may be employed.

The inlet orifices 202 may decrease in cross-sectional area proceeding from the first axial end 120 toward the second axial end 122, as shown, such that orifice 202-1 is larger than 202-2, which is larger than 202-3, and so on. In the circular orifice 202 embodiment illustrated, this may be implemented by reducing the diameter of each adjacent inlet orifice 202.

However, the cross-sectional areas of the inlet orifices 202 need not be consecutively smaller. For example, the inlet orifices 202 may be disposed in groups of inlet orifices 202 with common size, with, for example, each group of inlet orifices 202, proceeding toward the second axial end 122, having a smaller cross-sectional area than the previous group of inlet orifices 202. Moreover, in some embodiments, the cross-sectional area may be reduced by partially obstructing the inlet orifices 202, employing nozzles of reduced size, reducing the number of holes that make up each of the orifices 202 (i.e., in a multi-hole orifice embodiment) or the like.

Figure 4 illustrates an axial end view of the second axial end 122 of the shroud 118, according to an embodiment. As shown, the shroud 122 may include an axial end wall 300 at the second axial end 122. The axial end wall 300 may be annular, as shown, having an inner diameter 302 that is smaller than the outer diameter of the casing 116. In other embodiments, the axial end wall 300 may be disk-shaped, omitting such an inner diameter 302. Accordingly, the axial end wall 300 may define an axial end of the flowpaths 200.

The axial end wall 300 may also define the outlet orifices 304, such that the outlet orifices 304 extend axially through the axial end wall 300, and align with the flowpaths 200 between adjacent fins 124. As will be appreciated, the orifices 304 may be configured to communicate with the flowpaths 200 with which they are aligned. For ease of illustration, a single set of outlet orifices 304 are shown between two fins 124 and aligned with one of the flowpaths 200; however, it will be appreciated that this configuration may be repeated as proceeding circumferentially for some or all of the flowpaths 200. The outlet orifices 304 may be disposed in any configuration and may have any suitable shape, for example, one or more rows and one or more columns of holes, as shown. In some cases, the outlet orifices 304 may be provided in any other configuration. For example, the axial end wall 300 may be a grate, such that the outlet orifices 304 are defined both between the fins 124 and aligned with the fins 124. In other embodiments, the outlet orifices 304 may be provided by a single hole or opening aligned with the flowpaths 200. Furthermore, in some cases the cross-sectional flowpath area of the outlet orifice(s) 304 and/or the total flowpath area of the outlet orifice 304 or set of outlet orifices 304 communicating with one of the flowpaths 200 may be the same or different than the outlet orifice(s) 304 communicating with another one of the flowpaths 200.

In at least one embodiment, the flowpath areas of the outlet orifice(s) 304 communicating with one of the flowpaths 200 may be different from the flowpath areas of the inlet orifice(s) 202 communicating with the one of the flowpaths 200. In other embodiments, the inlet and outlet orifices 202, 304 may have different flowpath areas. Moreover, the inlet and outlet orifices 202, 304 may be sized such that pressure drop in the cooling fluid proceeding therethrough is minimized, while the orifices 202, 304 remain sufficiently small so as to retain a protective function for the flowpaths 200.

Referring now again to Figure 1, an example of operation of an embodiment of the system 100 may be appreciated. When the driver 102 is engaged, it may rotate the shaft 108 and thus drive the driven component 106, e.g., via the gearbox 104. Rotating the shaft 108 may also cause the fan 110 to rotate, such that the impeller blades 111 tend to push or induce air to flow away from the first axial end 120 of the driver 102 and across the driver 102 toward the second axial end 122. The rotation of the fan 110 may thus cause the shroud 118 to ingest air, or another cooling fluid, through the inlet orifices 202, shown in Figure 2, and as schematically depicted in Figure 1 with arrows 500, 502, and 504. The cooling fluid may then flow into the flowpath 200 (Figure 2) between the fins 124, turn to flowing at least generally axially toward the second axial end 122, as moved by the fan 110, as indicated by arrow 506. Eventually, the cooling fluid may exit through the axial end wall 300 (Figure 4), e.g., via the outlet orifices 304. In a specific embodiment, a suitable fan 110 may cause 8-12 pounds per minute of air to be pushed through the flowpaths 200.

While the cooling fluid proceeds through the flowpath 200, it may transfer heat from the casing 116, the fins 124, or both and carry the heat out of the shroud 118 and ultimately away from the driver 102, thereby cooling the driver 102. Accordingly, it will be seen that the shroud 118 provides a protected cooling fluid (e.g., ambient air) inlet, which avoids contamination by foreign objects, among other things. Furthermore, the rotor 112 and/or shaft 108 may be cooled by conduction of heat to the fan 110. Additionally, embodiments of the present system 100 may include flowpaths for the cooling air in the shaft 108, between the rotor 114 and the stator 112, or elsewhere in the driver 102.

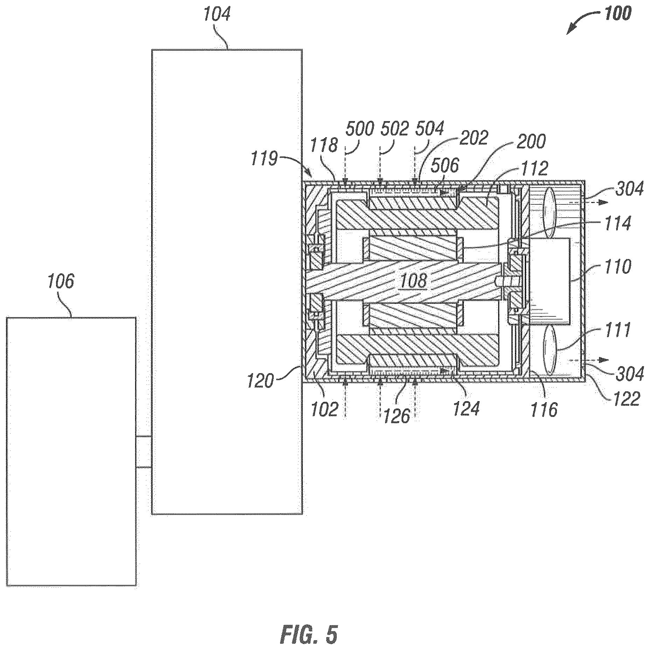

Figure 5 illustrates another embodiment of the system 100, which may be similar in many respects to the embodiment of Figure 1. As shown, however, the shroud 118 may not form the annular gap 119 with the casing 116 or may have an annular gap 119 of a comparatively reduced size. Thus, the shroud 118 may, for example, be sized to fit immediately adjacent to the outer diameter of the casing 116. Further, the inlet orifices 202 and the outlet orifices 304 may be defined in the casing 116 and in the shroud 118. The fins 124 may be defined by the outer diameter of the stator 112, as will be described in greater detail below. In some embodiments, the shroud 118 may be included, e.g., extending past the fan 110 and over at least a portion of the casing 116; however, in other embodiments, the shroud 118 may be omitted, with the inlet orifices 202 being defined directly in the casing 116 to allow protected fluid communication with the flowpaths 200 defined therein. In such an embodiment, the casing 116 may be considered the shroud.

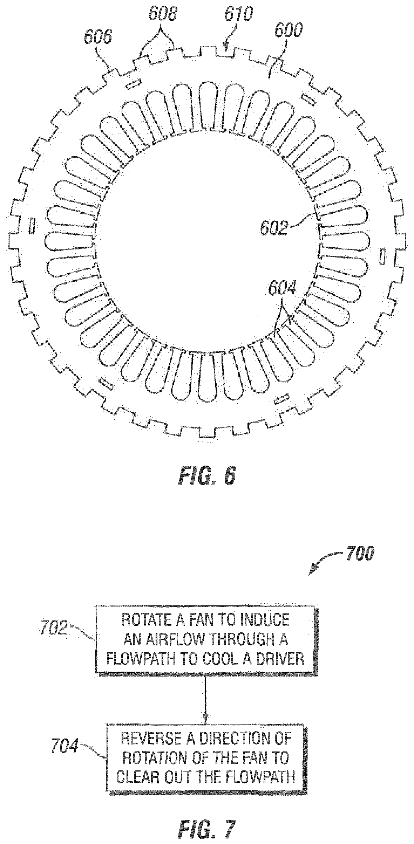

Figure 6 illustrates an end view of a lamination 600 of the stator 112, according to an embodiment. The stator 112 may include a plurality of such laminations 600, separated by appropriate films or other materials to control heat generation, eddy currents, etc. Further, the lamination 600 may be generally disk shaped, having an inner diameter 602 sized to fit around and provide clearance for the shaft 108 and rotor 114 (Figure 5). The lamination 600 may also include a plurality of poles 604 arranged circumferentially around and adjacent to the inner diameter 602.

The lamination 600 may also include an outer diameter 606. The outer diameter 606 may define a plurality of tabs 608 which may be separated circumferentially apart by cutouts 610. When a plurality of the laminations 600 are stacked together axially, the tabs 608 may align so as to form the fins 124. Accordingly, the cutouts 610 may also align, thereby forming the flowpaths 200.

Referring again to Figure 5, operation of the embodiment of the system 100 may be generally similar to the operation of the embodiment shown in and described above with reference to Figures 1-4. Accordingly, the cooling air may be ingested through the inlet orifices 202 defined radially in the shroud 118 and/or the casing 116, as induced by the rotation of the fan 110 and indicated by arrows 500, 502, and 504. The size of the inlet orifices 202 may block large foreign objects from proceeding therethrough, thereby preventing blockage of the flowpaths 200.

The cooling fluid may then be turned to flow axially between the fins 124, past the fan 110, and exhausted through the second end 122 of the shroud 118. In an embodiment where the inlet orifices 202 decrease in size proceeding away the first axial end 120 and toward the second axial end 122, the size reduction may ensure that a large percentage of the cooling fluid received through the larger orifices (e.g., inlet orifices 202-1 and 202-2 as shown in Figure 3) is not lost by proceeding outward through the inlet orifices 202 closer to the second axial end 122 (e.g., inlet orifices 202-4 and 202-5), thereby avoiding short-circuiting the fluid flow, while maintaining a relatively cool temperature in the cooling fluid along the axial extent of the flowpath 200.

Moreover, the cooling fluid may transfer heat from the fins 124, which, since they are defined by the stator laminations 600, may promote increased heat transfer efficiency, as the stator laminations 600 may be a location where heat is generated. Further, the cooling fluid may also proceed past the casing 116 and the shroud 118, or any other structure with which it interacts, and carry the heat away through the exhaust.

Figure 7 illustrates a flowchart of a method 700 for operating a driver system, such as the system 100, according to an embodiment. While the method 700 is described with reference to the embodiments of the system 100 discussed above, it will be appreciated that the method 700 is not limited to any particular structure unless otherwise expressly stated herein.

The method 700 may begin by rotating the fan 110 to induce a certain cooling air flow, for example, using the driver 102, as at 702. The driver 102 may be an electric motor, and thus rotating the fan 110 may occur by providing electrical current to the driver 102. The rotation of the fan 110 induces air (or any other cooling fluid) to flow radially inwards through the inlet orifices 202 defined in the shroud 118, with the shroud 118 disposed around the driver 102. The air may then take an axial turn, and proceed generally axially through the flowpaths 200 defined between circumferentially-adjacent fins 124.

As described above, the fins 124 may extend radially at least partially between the shroud 118 and a rotor 114 of the driver 102. For example, the fins 124 may extend radially inwards from the shroud 118 and to, or proximal to, the casing 116 of the driver 102. In another embodiment, the fins 124 may be defined by tabs 608 of the stator laminations 600. In some such cases, a separate shroud 118 may be omitted, such that the casing 116 provides the shroud, and thus may be considered a separate component from the driver 102, but in other cases may be considered part of the driver 102. The air may then flow out of the shroud 118 (and/or the casing 116) via the outlet orifices 302 defined in the shroud 118, e.g., in the axial end wall 300.

The method 700 may also include reversing the direction of the driver 102, such that the fan 110 reverses rotational direction, as at 704. For example, this may include disengaging the gearbox 104 from the shaft 108. Further, such reversal of the direction of the rotation of the fan 110 may cause the air flow to reverse direction in the cooling fluid path, enter the shroud 118 through the outlet orifices 302, proceed through the flowpaths 200, and then out of the shroud 118 via the inlet orifices 202. In some cases, the reversing at 704 may be used to clear out the flowpaths 200 of any small debris that may have been received through the inlet orifices 202 and accumulated or otherwise lodged in the flowpaths 200.

In some cases, the inlet orifices 202 may each communicate with one or more of the flowpaths and may define a largest dimension. The flowpaths 200 each define a smallest dimension. The largest dimension of each one of the inlet orifices 202 may be smaller than the smallest dimension of the one or more flowpaths 200 with which the one of the inlet orifices 202 communicates, so as to protect the flowpaths 200 from debris that might otherwise obstruct the flowpaths 200. Furthermore, the inlet orifices 202 may each define a cross-sectional flowpath area, with the cross-sectional flowpath areas of the inlet orifices 202 decreasing proceeding axially toward the fan 110, i.e., as proceeding away from the first axial end 120 and toward the second axial end 122, the inlet orifices 202 may become smaller.

While the present teachings have been illustrated with respect to one or more implementations, alterations and/or modifications may be made to the illustrated examples without departing from the scope of the appended claims. For example, it will be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings.

It will be appreciated that structural components and/or processing stages may be added or existing structural components and/or processing stages may be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items may be selected.

The term "about" indicates that the value listed may be somewhat altered, as long as the alteration does not result in nonconformance of the process or structure to the illustrated embodiment. Finally, "exemplary" indicates the description is used as an example, rather than implying that it is an ideal. Other embodiments of the present teachings will be apparent to those skilled in the art from consideration of the specification and practice of the disclosure herein. It is intended that the specification and examples be considered as exemplary, with the true scope of the present teachings being defined by the following claims.

Terms of relative position as used in this application are defined based on a plane parallel to the conventional plane or working surface of a workpiece, regardless of the orientation of the workpiece. The term "horizontal" or "lateral" as used in this application is defined as a plane parallel to the conventional plane or working surface of a workpiece, regardless of the orientation of the workpiece. The term "vertical" refers to a direction perpendicular to the horizontal. Terms such as "on," "side," "higher," "lower," "over," "top," and "under" are defined with respect to the conventional plane or working surface, regardless of the orientation of the workpiece.

## Claims

1. A cooling apparatus for cooling the driver of a driver system (100), comprising:
a device configured to move a cooling fluid for cooling the driver;
a shroud (118) disposed at least partially over the driver (102), the shroud comprising a plurality of inlet orifices (202) and a plurality of outlet orifices (304) in fluid communication with the device (102); and
a plurality of fins (124) extending at least partially between the shroud (118) and the driver (102), and possibly also extending at least partially in the driver (102), or both, the plurality of fins (124) being spaced apart and defining flowpaths (200) therebetween, wherein the flowpaths communicate with the inlet orifices and the outlet orifices, and **characterized by** the plurality of inlet orifices (202) comprising rows of orifices aligned with each of the flowpaths, wherein cross-sectional flowpath areas of the plurality of inlet orifices decrease proceeding in an axial direction toward the axial end wherein the plurality of outlet orifices are defined.

2. A driver system, comprising a driver (102) and the cooling apparatus of claim 1.

3. The driver system of claim 2, wherein:
the driver (102) further comprises a casing;
the shroud (118) and the casing (116) of the driver define an annular gap (119) therebetween; and
the plurality of fins (124) extend radially inward from an outer wall of the shroud and at least partially through the annular gap.

4. The driver system of claim 4, wherein at least some of the plurality of fins (124) contact the casing (116).

5. The driver system of claim 2, wherein the shroud (118) defines an axial end wall positioned proximal to the device, wherein the plurality of outlet orifices are defined extending axially through the axial end wall.

6. The driver system of claim 2, wherein the shroud (118) at least partially surrounds the device.

7. The cooling apparatus of claim 1,
wherein the shroud is comprising a cylindrical outer wall defining first and second axial ends and said plurality of inlet orifices (202) extending radially therethrough, the cylindrical outer wall being configured to fit over the driver (102); and
said plurality of fins (124) being spaced circumferentially apart and extending radially inward from the cylindrical outer wall,
wherein the plurality of fins (124) and the cylindrical outer wall at least partially define said flowpaths extending at least partially between the first and second axial ends, wherein at least some of the plurality of inlet orifices are positioned between the plurality of fins (124), such that the plurality of inlet orifices communicate with the flowpaths, and wherein the flowpaths are configured to communicate with a device configured to move a cooling fluid therethrough.

8. The cooling apparatus of claim 7, further comprising an axial end wall extending radially inward from the cylindrical outer wall proximal to the second end, the axial end wall defining a plurality of outlet orifices in fluid communication with the device and the flowpaths.

9. The cooling apparatus of claim 8, wherein the cylindrical outer wall is configured to fit over the device, such that the device is positioned between the driver (102) and the axial end wall.

10. The cooling apparatus of claim 7, wherein the plurality of inlet orifices (202) each define a cross-sectional flowpath area, wherein the cross-sectional flowpath area of each of the plurality of inlet orifices decreases in size proceeding way from the first axial end and toward the second axial end.

11. The cooling apparatus of claim 7, wherein the device is a fan (110) that is driven by the driver, the driver is an electric motor, and the cooling fluid is ambient air.

## Patentansprüche

1. Kühlvorrichtung zum Kühlen des Antriebs eines Antriebssystems (100), umfassend:
eine Einrichtung, die eingerichtet ist, um ein Kühlfluid zum Kühlen des Antriebs zu bewegen;
eine Ummantelung (118), die mindestens teilweise über dem Antrieb (102) angeordnet ist, wobei die Ummantelung eine Vielzahl von Einlassöffnungen (202) und eine Vielzahl von Auslassöffnungen (304) umfasst, die in einer Fluidverbindung mit der Einrichtung stehen (102); und
eine Vielzahl von Lamellen (124), die sich mindestens teilweise zwischen der Ummantelung (118) und dem Antrieb (102) erstrecken und sich möglicherweise auch mindestens teilweise im Antrieb (102) oder in beiden erstrecken, wobei die Vielzahl von Lamellen (124) in Abständen zueinander angeordnet sind und Strömungswege (200) dazwischen definieren, wobei die Strömungswege in Verbindung mit den Einlassöffnungen und den Auslassöffnungen stehen, und **dadurch gekennzeichnet, dass** die Vielzahl von Einlassöffnungen (202) Reihen von Öffnungen umfasst, die auf jeden der Strömungswege ausgerichtet sind, wobei Strömungsweg-Querschnittsflächen der Vielzahl von Einlassöffnungen in einer Axialrichtung fortschreitend in Richtung des axialen Endes abnehmen, und wobei die Vielzahl von Auslassöffnungen definiert sind.

2. Antriebssystem, umfassend einen Antrieb (102) und die Kühlvorrichtung nach Anspruch 1.

3. Antriebssystem nach Anspruch 2, wobei:
der Antrieb (102) ferner ein Gehäuse umfasst;
die Ummantelung (118) und das Gehäuse (116) des Antriebs einen ringförmigen Zwischenraum (119) dazwischen definieren; und
die Vielzahl von Lamellen (124) sich von einer Außenwand der Ummantelung und mindestens teilweise durch den ringförmigen Zwischenraum radial nach innen erstrecken.

4. Antriebssystem nach Anspruch 4, wobei mindestens einige der Vielzahl von Lamellen (124) das Gehäuse (116) berühren.

5. Antriebssystem nach Anspruch 2, wobei die Ummantelung(118) eine nahe der Einrichtung positionierte axiale Endwand definiert, wobei die Vielzahl von Auslassöffnungen dadurch definiert sind, dass sie sich axial durch die axiale Endwand erstrecken.

6. Antriebssystem nach Anspruch 2, wobei die Ummantelung(118) die Einrichtung mindestens teilweise umgibt.

7. Kühlvorrichtung nach Anspruch 1,
wobei die Ummantelungeine zylindrische Außenwand umfasst, die erste und zweite axiale Enden definiert und die Vielzahl von Einlassöffnungen (202) sich axial dort hindurch erstrecken, wobei die zylindrische Außenwand eingerichtet ist, um über den Antrieb (102) zu passen; und
die Vielzahl von Lamellen (124) in Umfangsrichtung in Abständen zueinander angeordnet sind und sich von der zylindrischen Außenwand radial nach innen erstrecken,
wobei Vielzahl von Lamellen (124) und die zylindrische Außenwand mindestens teilweise die Strömungswege definieren, die sich mindestens teilweise zwischen den ersten und zweiten axialen Enden erstrecken, wobei mindestens einige der Vielzahl von Einlassöffnungen zwischen der Vielzahl von Lamellen (124) positioniert sind, sodass die Vielzahl von Einlassöffnungen mit den Strömungswegen in Verbindung stehen, und wobei die Strömungswege eingerichtet sind, um mit einer Einrichtung in Verbindung zu stehen, die eingerichtet ist, um ein Kühlfluid dort hindurch zu bewegen.

8. Kühlvorrichtung nach Anspruch 7, ferner umfassend eine axiale Endwand, die sich nahe dem zweiten Ende von der zylindrischen Außenwand radial nach innen erstreckt, wobei die axiale Endwand eine Vielzahl von Auslassöffnungen definiert, die in einer Fluidverbindung mit der Einrichtung und den Strömungswegen stehen.

9. Kühlvorrichtung nach Anspruch 8, wobei die zylindrische Außenwand eingerichtet ist, um über die Einrichtung zu passen, sodass die Einrichtung zwischen dem Antrieb (102) und der axialen Endwand positioniert ist.

10. Kühlvorrichtung nach Anspruch 7, wobei die Vielzahl von Einlassöffnungen (202) jeweils eine Strömungsweg-Querschnittsfläche definieren, wobei die Größe der Strömungsweg-Querschnittsfläche jeder der Vielzahl von Einlassöffnungen fortschreitend weg vom ersten axialen Ende und in Richtung des zweiten axialen Endes abnimmt.

11. Kühlvorrichtung nach Anspruch 7, wobei die Einrichtung ein Lüfter (110) ist, der durch den Antrieb angetrieben wird, wobei der Antrieb ein Elektromotor ist und das Kühlfluid Umgebungsluft ist.

## Revendications

1. Appareil de refroidissement pour refroidir l'organe d'entraînement d'un système d'organe d'entraînement (100), comprenant :
un dispositif configuré pour déplacer un fluide de refroidissement pour refroidir l'organe d'entraînement ;
une gaine (118) disposée au moins partiellement sur l'organe d'entraînement (102), la gaine comprenant une pluralité d'orifices d'entrée (202) et une pluralité d'orifices de sortie (304) en communication fluidique avec 'le dispositif (102) ; et
une pluralité d'ailettes (124) s'étendant au moins partiellement entre 'la gaine (118) et l'organe d'entraînement (102), et éventuellement s'étendant aussi au moins partiellement dans l'organe d'entraînement" (102), ou les deux, les ailettes de la pluralité d'ailettes (124) étant espacées et définissant entre elles des voies d'écoulement (200), les voies d'écoulement communiquant avec les orifices d'entrée et les orifices de sortie, et **caractérisée par** la pluralité d'orifices d'entrée (202) comprenant des rangées d'orifices alignées avec chacune des voies d'écoulement, dans lequel les sections transversales de voie d'écoulement de la pluralité d'orifices d'entrée diminuent en se déplaçant dans une direction axiale vers l'extrémité axiale dans laquelle la pluralité d'orifices de sortie est définie.

2. Système d'organe d'entraînement, comprenant un organe d'entraînement (102) et l'appareil de refroidissement de la revendication 1.

3. Système d'organe d'entraînement selon la revendication 2, dans lequel :
l'organe d'entraînement (102) comprend en outre un boîtier ;
la gaine (118) et le boîtier (116) de l'organe d'entraînement définissent entre eux un espace annulaire (119) ; et
la pluralité d'ailettes (124) s'étend radialement vers l'intérieur à partir d'une paroi externe de 'la gaine et au moins partiellement à travers l'espace annulaire.

4. Système d'organe d'entraînement selon la revendication 4, dans lequel au moins une partie de la pluralité d'ailettes (124) est en contact avec la gaine (116).

5. Système d'organe d'entraînement selon la revendication 2, dans lequel la gaine (118) définit une paroi d'extrémité axiale positionnée à proximité du dispositif, dans lequel la pluralité d'orifices de sortie est définie comme s'étendant axialement à travers la paroi d'extrémité axiale.

6. Système d'organe d'entraînement selon la revendication 2, dans lequel la gaine (118) entoure au moins partiellement le dispositif.

7. Appareil de refroidissement selon la revendication 1,
dans lequel la gaine comprend une paroi externe cylindrique définissant une première et une seconde extrémité axiale et ladite pluralité d'orifices d'entrée (202) s'étendant radialement à travers, la paroi externe cylindrique étant configurée pour s'ajuster sur l'organe d'entraînement (102) ; et
les ailettes de ladite pluralité d'ailettes (124) étant espacées circonférentiellement et s'étendant radialement vers l'intérieur à partir de la paroi externe cylindrique,
dans lequel la pluralité d'ailettes (124) et la paroi externe cylindrique définissent au moins partiellement lesdites voies d'écoulement s'étendant au moins partiellement entre la première et la seconde extrémité axiale, dans lequel au moins une partie de la pluralité d'orifices d'entrée est positionnée entre la pluralité d'ailettes (124), de sorte que la pluralité d'orifices d'entrée communique avec les voies d'écoulement, et dans lequel les voies d'écoulement sont configurées pour communiquer avec un dispositif configuré pour déplacer un fluide de refroidissement à travers celui-ci.

8. Appareil de refroidissement selon la revendication 7, comprenant en outre une paroi d'extrémité axiale s'étendant radialement vers l'intérieur à partir de la paroi externe cylindrique à proximité de la seconde extrémité, la paroi d'extrémité axiale définissant une pluralité d'orifices de sortie en communication fluidique avec l'appareil et les voies d'écoulement.

9. Appareil de refroidissement selon la revendication 8, dans lequel la paroi externe cylindrique est configurée pour s'ajuster sur le dispositif, de sorte que le dispositif est positionné entre l'organe d'entraînement (102) et la paroi d'extrémité axiale.

10. Appareil de refroidissement selon la revendication 7, dans lequel les orifices d'entrée de la pluralité d'orifices d'entrée (202) définissent chacun une section transversale de voie d'écoulement, la section transversale de voie d'écoulement de chacun des orifices d'entrée de la pluralité d'orifices d'entrée diminuant en taille de la première extrémité axiale à la seconde extrémité axiale.

11. Appareil de refroidissement selon la revendication 7, dans lequel le dispositif est un ventilateur (110) qui est entraîné par l'organe d'entraînement, l'organe d'entraînement est un moteur électrique, et le fluide de refroidissement est l'air ambiant.
